# EUROPÄISCHE PATENTSCHRIFT

(11) **EP 1 094 098 B1**
(45) Veröffentlichungstag und Bekanntmachung des Hinweises auf die Patenterteilung: **07.04.2004**
(21) Anmeldenummer: 00121911.2
(22) Anmeldetag: 07.10.2000
(51) Int. Cl.: C09J 7/02

(54) **Verpackungs-Klebeband**
Packaging adhesive tape
Bande adhésive d'emballage

(30) Priorität: 20.10.1999 DE 19950510
(43) Veröffentlichungstag der Anmeldung: 25.04.2001
(73) Patentinhaber: Tesa AG, 20253 Hamburg (DE)
(72) Erfinder: Galle, André, 22767 Hamburg (DE); Röber, Stefan, Dr., 22453 Hamburg (DE)

(56) Entgegenhaltungen:
- EP-A- 0 213 737
- EP-A- 0 590 839
- EP-A- 0 796 906
- US-A- 4 576 854

## Beschreibung

Gegenstand der Erfindung sind lösemittelfreie Klebebänder mit einer Folie auf Basis von Polyolefinen und einer Klebemasse auf Basis von Acrylatdispersion und ihre Verwendung als Verpackungs-Klebeband.

Lösemittelhaltige Klebebänder mit einer Folie auf Basis von Polyolefinen, insbesondere auf Basis von biaxial gerecktem Polypropylen, und einer Klebemasse auf Basis von Acrylatdispersion sind bekannt und werden von bekannten Herstellern von Verpackungsklebebändern angeboten.

Eine Beschreibung befindet sich beispielsweise in "Packaging Tapes", Stefan Roeber in Handbook of Pressure Sensitive Adhesive Technology, Third Edition, edited by Donatas Satas, Satas&Associates, Warwick, Rhode Island pp. 787 - 814. Weitere Beschreibungen befinden sich in "European Adhesives & Sealants 10 (4), 1993, 29 von G. Pedala" und "European Adhesives & Sealants 2 (2), 1985, 18 von R.W. Andrew".

Die bekannten Verpackungsklebebänder mit einer Folie auf Basis von biaxial gerecktem Polypropylen und einer Klebemasse auf Basis von Acrylatdispersion werden für viele Verpackungsaufgaben, insbesondere beim Verschliessen von Kartons eingesetzt. Im Vergleich zu handelsüblichen Klebebändern mit Klebemasse auf Basis lösemittelhaltiger Naturkautschukklebemassen, die mit geeigneten Harzen abgemischt werden, weisen die Klebebänder mit Klebemasse auf Basis Acrylatdispersion den Nachteil auf, dass oftmals ein nicht zufriedenstellendes Verschlussergebnis erzielt wird. Dies bedeutet, dass sich die verschlossenen Kartons nach wenigen Minuten oder Stunden nach dem Verschließen wieder öffnen. Üblicherweise tritt dieses ungewollte Öffnen nicht für alle verschlossenen Kartons sondern nur für einen kleineren Teil auf, der dann jedoch in den heute üblichen automatischen Förder- und Verpackungsstraßen zu Störungen und Nacharbeit führt. Das Problem tritt verstärkt auf, wenn Kartons verwendet werden, die aus recycliertem Papier hergestellt wurden. Der Anteil von Kartons aus recycliertem Papier nimmt seit einigen Jahren ständig zu.

Ursache für das Versagen der Klebebänder auf Basis von Acrylatdispersionen ist das nicht ausreichende Anfassvermögen der Klebemasse zu den Kartonoberflächen aus recycliertem Papier und die durch zu hohe Abrollkraft beim Verarbeiten in das Klebeband gebrachte Dehnung. Bei ausreichender Deckelklappenspannung der Kartons, verursacht durch den Fülldruck des verpackten Materials im Karton oder durch die dem Verschließen entgegenwirkende Spannung des Verpackungsmaterials, löst sich das Klebeband von der Kartonoberfläche und der Karton öffnet sich.

Eine bekannte Maßnahme zur Verbesserung des Tacks ist die Zugabe von Harzen zu Acrylatdispersionen. Die Harze können sowohl als Harzlösung mit einem geeigneten Lösemittel, z.B. Toluol, als auch als wässrige Harzdispersion zugegeben werden. Die Zugabe von Harzlösungen ist jedoch ungeeignet, wenn lösemittelfreie Klebebänder das Ziel der Entwicklung sind.

Eine Übersicht über mögliche Harzdispersionen findet sich beispielsweise in "Resin Dispersions", Anne Z. Casey in Handbook of Pressure Sensitive Adhesive Technology, Second Edition, edited by Donatas Satas, Van Nostrand Reinhold New York, pp. 545 - 566. Ergebnisse von der Abmischung von Acrylatdispersionen mit Harzdispersionen werden in "Modification of Acrylic Dispersions" , Alexander Zettl in Handbook of Pressure Sensitive Adhesive Technology, Second Edition, edited by Donatas Satas, Van Nostrand Reinhold New York, pp. 457 - 493, beschrieben.

Von der Firma Hercules BV wird eine Mischung aus Acrylatdispersionen (Acronal 85D, BASF), 33 Gew.-% Harzdispersionen auf Basis eines Kohlenwasserstoffharzes (Tacolyn 4177) und ca. 4 Gew.-% (2% bezogen auf die Mischung der wässrigen Dispersionen) von einem isocyanathaltigen Vernetzer (Basonat F DS 3425X, BASF) vorgeschlagen ("Tacolyn 4177 and Tacolyn 153 Resin Dispersions, use in WBPSA technical tapes for high temperature application"; Produktinformation Hercules BV vom 06.01.1995, Seite 1 - 4.). Hierdurch wird eine verbesserte Wärmestandsfestigkeit, verbesserte Kohäsion und verbesserter Tack zu Stahl erzielt. Die Verankerung der Masse auf einer Folie aus biaxial gerecktem Polypropylen ist jedoch nicht ausreichend. Ein ausreichend leises und leichtes Abrollen kann zudem durch die vorgeschlagenen Klebemassen nicht erzielt werden und die Verwendung des isocyanathaltigen Vemetzers führt zu erhöhtem Aufwand zur Arbeitssicherheit, da Basonat F DS 3425X als Gefahrstoff gemäß Gefahrstoffverordnung eingestuft ist und Sensibilisierung durch Einatmen oder Hautkontakt sowie Gesundheitsschädigung beim Einatmen möglich ist (Sicherheitsdatenblatt Basonat F DS 3425 gemäß 91/155/EWG vom 20.07.1994, BASF). Die vorgeschlagene Maßnahme ist damit nicht geeignet, Klebebänder mit verbessertem Anfassvermögen zu recycliertem Papier bei gleichzeitig leisem und leichten Abrollen sowie ausreichender Masseverankerung zu erzielen.

Eine weitere Möglichkeit, das Anfassvermögen zu Kartonagen aus recycliertem Papier zu verbessern ist in DE 19611501A1 und EP 0796906A2 beschrieben. Hier wird eine Klebemasse auf Basis einer Mischung von Acrylatdispersion, speziellen Harzdispersionen auf Basis von Kohlenwasserstoffharzen, Alkoxylierten Alkylphenolen und optional eines geeigneten Vernetzers verwendet.

Allen diesen o.g. Verbesserungen ist gemeinsam, dass das Abrollverhalten nicht verbessert wird. Insbesondere eine Reduzierung der Abrollkraft wird nicht erzielt. Hierbei ist zu beachten, dass die Klebebänder weiterhin ein ausreichend leises Abrollen leisten müssen. Dies bedeutet, dass die Klebebänder beim Abrollen bei der Verwendung in der Praxis, d.h., bei Abrollgeschwindigkeiten zwischen 20 und 200 m/min, leise abrollen, und so nicht zu einer weiteren Verschlechterung der Arbeitsbedingungen durch Lärmerhöhung beitragen. Üblicherweise ist das Einstellen von leisem Abrollen mit einer Erhöhung der Abrollkraft verbunden.

Aufgabe der vorliegenden Erfindung war es, ein Klebeband mit einer Folie auf Basis von Polyolefinen und einer Klebemasse auf Basis von Acrylatdispersion zu schaffen, das gegenüber herkömmlichen, handelsüblichen Klebebändern mit einer Folie auf Basis von Polyolefinen und einer Klebemasse auf Basis von Acrylatdispersion deutlich reduzierte Abrollkraft und gleichzeitig leises Abrollen bei hohen Abrollgeschwindigkeiten aufweist.

Darüber hinaus soll das neue Klebeband als Verpackungsklebeband für handelsübliche Kartonagen geeignet sein. Weiterhin soll das Klebeband bedruckt werden können, ohne das eine weitere Oberflächenbehandlung mittels Coronaentladung beim Druckprozess notwendig ist.

Diese Aufgabe wurde gelöst durch ein Klebeband bestehend mindestens aus
a. einer Folie auf Basis von gereckten Polyolefinen und
b. einer Klebeschicht mit einem Schichtauftrag zwischen 10 und 45g/m² hergestellt aus einer Mischung enthaltend

| | |
|---|---|
| 95 -99,8 Gew.-% | Acrylatpolymere aus Acrylatdispersion (b.1 ); |
| 0,2 - 5 Gew.-% | Kolloidales Siliciumdioxid mit einer spezifischen Oberfläche größer 50 m²/g und hydrophiler Modifikation dieser Oberfläche (b.2). |

In einer ersten bevorzugten Ausführungsform der Erfindung enthält die obige Mischung

| | |
|---|---|
| 97,0 - 99,5 Gew.-% | Acrylatpolymere aus Acrylatdispersion (b.1); |
| 0,5-3,0 Gew.-% | Kolloidales Siliciumdioxid mit einer spezifischen Oberfläche größer 50 m²/g und hydrophiler Modifikation der Oberfläche (b.2). |

Die Verwendung von Folien auf Basis von gereckten Polyolefinen ist lange bekannt und gehört zum Stand der Technik. Monoaxial und biaxial gereckte Folien auf Basis von Polypropylen werden in großen Mengen für Verpackungsklebebänder, Strapping-Tapes und andere Klebebänder eingesetzt. Auch Folien auf Basis von gerecktem Polyethylen oder gereckten Copolymeren enthaltend Ethylen- und/oder Propyleneinheiten sind bekannt. Auch Mischungen der verschiedenen Polymere können zum Herstellen der Folien verwendet werden.

Monoaxial gerecktes Polypropylen zeichnet sich durch seine hohe Reissfestigkeit und geringe Dehnung in Längsrichtung aus und wird beispielsweise zur Herstellung von Strapping-Tapes verwendet. Die Dicken der Folien liegen bevorzugt zwischen 25 und 200 µm, insbesondere zwischen 40 und 130µm. Folien aus monoaxial gerecktem Polypropylen sind zur Herstellung der erfindungsgemäßen Klebebänder geeignet.

Besonders bevorzugt zur Herstellung der erfindungsgemäßen Klebebänder sind biaxial gereckte Folien auf Basis von Polypropylen mit eine Reckverhältnis in Längsrichtung zwischen 1:4 und 1:9, bevorzugt zwischen 1:4,8 und 1:6 sowie einem Reckverhältnis in Querrichtung zwischen 1:4 und 1:9 , bevorzugt zwischen 1:4,8 und 1:8,5. Die erzielten Elastizitätsmodule in Längsrichtung, gemessen bei 10% Dehnung nach ASTM D882, liegen üblicherweise zwischen 1000 und 4000 N/mm², vorzugsweise zwischen 1500 und 3000 N/mm². Die erzielten Elastizitätsmodule in Querrichtung liegen ebenfalls zwischen 1000 und 4000 N/mm², vorzugsweise zwischen 1500 und 3000 N/mm².

Die Dicken der biaxial gereckten Folien liegen insbesondere zwischen 15 und 100 µm, vorzugsweise zwischen 20 und 50 µm. Besonders bevorzugt sind Folien mit einer Dicke größer als 24 µm.

Die biaxial gereckten Folien auf Basis von Polypropylen können mittels Blasfolienextrusion hergestellt werden, bei der die Reckung in alle Richtungen der Folienebene gleichzeitig stattfindet und üblicherweise in Längsrichtung und Querrichtung ähnliche mechanische Eigenschaften erreicht werden. Beispielhaft seien die biaxial gereckten Folien der Firma ICI Propafilm MG20, MG25, MG30 und MG35 sowie Propafilm OM15, OM20 und OM30 genannt. Grundsätzlich kann die Folienherstellung mittels Blasfolienextrusion durch einen weiteren Reckprozess der extrudierten Folie in Längsrichtung ergänzt werden, um so gezielt geeignete Eigenschaften in Längsrichtung einzustellen.

Die biaxial gereckten Folien können aber auch mittels üblicher Flachfolienanlagen hergestellt werden, bei der üblicherweise zuerst die Reckung in Längsrichtung and danach die Reckung in Querrichtung ausgeführt wird. Mit diesem Prozess können in Längs- und Querrichtung unterschiedliche Eigenschaften eingestellt werden. Die Reckverhältnisse in Längsrichtung liegen insbesondere zwischen 1:4,5 und 1:6 (bevorzugt 1:4,8 bis 1:5,6) und in Querrichtung zwischen 1:7 und 1:9. Beispielhaft seien biaxial gereckte Folien der Firma Mobil mit der Bezeichnung BICOR OPP FILM 35 MB 250 und der Firma Pao Yan Tsae Yih Co., LTD. (Taiwan) mit der Bezeichnung Pao Yan BOPP 35µm genannt. Grundsätzlich bekannt sind auch biaxial gereckte Folien, die zuerst in Längsrichtung, dann in Querrichtung und abschließend noch einmal in Längsrichtung gereckt werden.

Die biaxial gereckten Folien können auch mittels des in den letzten Jahren von der Firma Brückner in Deutschland entwickelten LISIM-Verfahrens hergestellt werden. Bei diesem Prozess wird die aus der Extruderdüse austretende, ungereckte Polyolefinfolie seitlich von Klemmbacken fixiert und dann simultan in Längs- und Querrichtung gereckt.

Monoaxial gereckte Folien sind überwiegend einschichtig, grundsätzlich können aber auch mehrschichtige, monoaxial gereckte Folien hergestellt werden. Bekannt sind überwiegend ein-, zwei- und dreischichtige Folien, wobei der Anzahl der Schichten auch größer gewählt werden kann. Die Dicke und die Zusammensetzung der verschiedenen Schichten sind nicht notwendigerweise gleich sondern können so gewählt werden, dass das gewünschte Eigenschaftsbild erzielt wird.

Biaxial gereckte Folien werden sowohl ein- als auch mehrschichtig hergestellt. Im Falle der mehrschichtigen Folien können auch hier die Dicke und Zusammensetzung der verschiedenen Schichten gleich sein aber auch verschiedene Dicken und Zusammensetzungen sind bekannt.

Bevorzugt für die erfindungsgemäßen Klebebänder sind einschichtige, biaxial gereckte Folien und mehrschichtige, biaxial gereckte Folien auf Basis von Polypropylen, die einen ausreichend festen Verbund zwischen den Schichten aufweisen, da ein Delaminieren der Schichten während der Klebebandherstellung oder der Anwendung nachteilig sind.

Es können auch biaxial gereckte, mehrschichtige Polyolefinfolien auf Basis von Polypropylen verwendet werden, deren Oberflächen eine gegenüber üblichen Polypropylenfolien deutlich erkennbare Mattigkeit aufweisen. Dies wird dadurch erzeugt, dass spezielle Copolymere oder Polymermischungen auf Basis von Polyolefinen verwendet werden, die bei der Herstellung mittels Extrusion und speziell angepassten Reckbedingungen zu ausreichend großer Oberflächenrauhigkeit und demzufolge einem matten Erscheinungsbild führen.

Die Oberflächen der Folien werden durch bekannte Verfahren behandelt. Bevorzugt sind Oberflächenbehandlungen durch Coronabehandlung und /oder durch Flammenvorbehandlung. Ein Übersicht über die Verfahren zur Oberflächenbehandlung enthält beispielseise der Artikel "Surface pretreatment of plastics for adhesive bonding" (A. Kruse, G.Krüger, A.Baalmann and O.-D. Hennemann, J. Adhesion Sci. Technol., Vol.9, No12, pp. 1611-1621 (1995).

Die biaxial gereckten Folien für die erfindungsgemäßen Klebebänder werden vorzugsweise auf der der Masse zugewandten Seite mittels Corona- und/oder Flammenvorbehandlung vorbehandelt, um so eine ausreichende Verankerung der Klebemasse oder des Primers auf der Folie zu erzielen. Die hierbei erzielten Oberflächenspannungen liegen insbesondere zwischen 35 und 47 mN/m und vorzugsweise zwischen 38 und 45 mN/m.

Die Oberflächenbehandlung der nicht beschichteten Seite kann vor der Beschichtung, direkt nach der Beschichtung oder auch in einem getrennten Arbeitsschritt, beispielsweise beim Schneiden und Umwickeln, erfolgen. Die Oberflächenbehandlung der nicht beschichteten Seite erfolgt vorzugsweise nach der Beschichtung. Bevorzugt ist eine Coronavorbehandlung mit der eine Oberflächenspannung, gemessen mit handelsüblichen Prüftinten, von 30 bis 45 mN/m, bevorzugt von 35 bis 40 mN/m und besonders bevorzugt von 36 bis 38 mN/m erzielt wird. Ebenso ist eine Oberflächenbehandlung mittels Flammenbehandlung möglich.

Der Schichtauftrag der Klebeschicht beträgt insbesondere 10 bis 45g/m². In einer bevorzugten Ausführung wird ein Schichtauftrag von 18 bis 35 g/m² , besonders bevorzugt 18 - 28 g/m² eingestellt.

Acrylatdispersionen sind bekannt und werden sowohl für Klebemassen von Klebebändern als auch für Klebemassen von Etiketten in großen Mengen eingesetzt. Die Acrylatdispersionen enthalten Partikeln aus Acrylatpolymeren, die dispers in der wässrigen Phase der Dispersion verteilt sind. Die Herstellung von Acrylatdispersionen erfolgt üblicherweise in wässrigem Medium durch Polymerisation geeigneter Monomere. Die Herstellung kann sowohl mittels Batchprozess als auch durch Zudosierung einer oder mehrerer Komponenten während der Polymerisation erfolgen. Beim Batchprozess werden alle benötigten Komponenten gleichzeitig vorgelegt.

Die Eigenschaften der Acrylatdispersionen und der entsprechenden Klebemassen wird überwiegend durch die Auswahl der Monomere und das erzielte Molekulargewicht bestimmt. Die wichtigsten Monomere sind n-Butylacrylat, 2-Ethylhexylacrylat und Acrylsäure. Geeignete Monomerbausteine sind beschrieben in "Acrylic Adhesives", Donatas Satas in Handbook of Pressure Sensitive Adhesive Technology, Second Edition, edited by Donatas Satas, Van Nostrand Reinhold New York, pp. 396 - 456.

Die erfindungsgemäßen Acrylatdispersionen enthalten insbesondere
0 bis 10 % Acrylsäure-Einheiten;
0 bis 100% n-Butylacrylat-Einheiten;
0 bis 100% 2-Ethylhexylacrylat-Einheiten

In einer bevorzugten Ausführung werden Acrylatdispersionen mit 0,5 bis 3% Acrylsäure-Einheiten verwendet. In einer weiteren bevorzugten Ausführung werden Acrylatdispersionen mit 0,5 bis 3% Acrylsäure-Einheiten und 99,5 bis 90% , besonders bevorzugt 99,5 bis 96%, n-Butylacrylat-Einheiten verwendet. Ein weiteres Beispiel für erfindungsgemäße Acrylatdispersionen sind Acrylatdispersionen mit 80-90% 2-Ethylhexylacrylat-Einheiten und 8 bis 20% n-Butylacrylat-Einheiten.

Die Acrylatdispersionen können zusätzlich weitere Monomer-Einheiten enthalten, durch die beispielsweise die Glasübergangstemperatur und die Vernetzbarkeit gesteuert werden kann. Beispiele sind Methylacrylat, Ethylacrylat, Methylethylacrylat. Maleinsäureanhydrid, Acrylamid, Glycidylmethacrylat, Isopropylacrylat, n-Propylacrylat, Isobutylacrylat, n-Octylacrylat sowie die entsprechenden Methacrylate dieser Acrylate. Die Acrylatdispersionen enthalten üblicherweise 0-10% dieser zusätzlichen Monomereinheiten, entweder werden ausschließlich eine zusätzliche Monomereinheit oder Mischungen derselben verwendet.

Die erzielte Glasübergangstemperatur hängt von den eingesetzten Monomeren ab. Die für die erfindungsgemäßen Klebemassen verwendeten Acrylatdispersionen weisen im getrockneten Zustand Glasübergangstemperaturen insbesondere zwischen -80 und -15°C, bevorzugt zwischen -75 und -25°C und besonders bevorzugt zwischen -55 und -35°C auf.

Der Feststoffgehalt der Acrylatdispersionen liegt insbesondere zwischen 30 und 70 Gew.-%, bevorzugt zwischen 45 und 60 Gew.-%.

Kolloidales Siliciumdioxid ist hinreichend bekannt. Beschreibungen der Herstellung, der chemischen und physikalischen Eigenschaften sowie Anwendungen findet man beispielsweise in "Ullmanns Encyklopädie der technischen Chemie; 4. Auflage, Band 21; Kap. Siliciumdioxid; s. 439ff." und "Römpp Chemie Lexikon; 9. Auflage; Band 3; 1990" wo auch weiterführende Literatur angegeben ist sowie in den Produktinformationen der Firma Degussa-Hüls zu Aerosil und der Firma DuPont zu Ludox® und Syton®.

Kolloidales Siliciumdioxid kann als Feststoff und als kolloidale Lösung in Wasser vorliegen. Bei der Herstellung der erfindungsgemäßen Klebemassen wird in jedem Fall eine kolloidale Lösung verwendet. Diese kann von vornherein als kolloidale Lösung vorliegen und bei der Herstellung der Klebemasse mit der Acrylatdispersion gemischt werden Ebenso ist es möglich, dass geeignetes kolloidales Siliciumdioxid mit ausreichender Hydrophilie als Feststoff eingesetzt wird, so dass bei der Mischung mit der Acrylatdispersion dann die wässrige kolloidale Lösung entsteht. In den im Markt erhältlichen Produkten wird möglichst hohe SiO₂-Konzentration und große Stabilität gegen Gelierung angestrebt. In der o.g. Literatur wird kolloidales Siliciumdioxid in wässriger Lösung als milchig trüb bis farblos klar beschrieben, abhängig von der Teilchengröße der SiO₂-Partikel. Diese Partikel sind überwiegend kugelförmig, räumlich begrenzt und elektrisch negativ geladen, so dass sich die Partikel gegenseitig abstoßen und so ausreichende Stabilität gegen Gelierung aufweisen. Der Fachmann stellt sich diese Partikel so vor, dass im Inneren der Partikel ein Gerüst von Siloxan-Bindungen vorliegt, während an der Oberfläche zusätzlich SiOH-Gruppen, sogenannte Silanolgruppen, vorliegen. Diese Silanolgruppen stellen eine hydrophile Modifikation dar und verleihen den Partikeln die hydrophilen Eigenschaften. Durch basische Modifizierung können an der Oberfläche Alkali-Silanolat-Gruppen, insbesondere Natrium-Silanolat-Gruppen erzeugt werden. Röntgen- und Elektronenbeugungsaufnahmen weisen darauf hin, dass die Partikel weitestgehend amorph sind.

Der durchschnittliche Partikeldurchmesser beträgt ca. 5-150nm je nach Präparat. Das erfindungsgemäße kolloidale Siliciumdioxid weist Partikeldurchmesser kleiner als 100nm, bevorzugt von 3 bis 30 nm und besonders bevorzugt von 5 - 12nm auf. Diese Grenzen sind zutreffend, wenn überwiegend monodisperse, sehr enge Partikelgrößenverteilungen vorliegen, wie dies beispielsweise bei Ludox® von DuPont gegeben ist. Grundsätzlich sind für die Erfindung auch polydisperse Systeme mit breiter Verteilung geeignet. Kolloidales Siliciumdioxid mit monodisperser Verteilung und den o.g. angeführten Partikelgrößen ist gegenüber kolloidalem Siliciumdioxid mit polydisperser Verteilung bevorzugt.

Ein wichtige Kenngröße ist die spezifische Oberfläche des kolloidalen Siliciumdioxids. Diese kann nach der bekannten BET-Methode und in Lösung mittels Titration mit Natronlauge in 20%iger Kochsalzlösung zwischen pH4 und pH9 bestimmt werden. In der o.g. Literatur werden spezifische Oberflächen von 50 bis 700 m²/g angegeben. Das erfindungsgemäße kolloidale Siliciumdioxid weist eine spezifische Oberfläche größer 50 m²/g, bevorzugt 100 bis 500 m²/g und besonders bevorzugt 200 bis 450m²/g auf.

Der SiO₂ -Anteil des kolloidalen Siliciumdioxids in wässriger Lösung liegt üblicherweise zwischen 5% und 60%. Das erfindungsgemäße kolloidale Siliciumdioxid hat bevorzugt einen SiO₂-Anteil von 10-55 Gew.-% und besonders bevorzugt von 20 - 40 Gew.-%.

Neben den Silanol-Gruppen und den Siloxan-Gruppen enthält die Oberfläche der erfindungsgemäßen Siliciumdioxidpartikel noch zusätzlich basische Modifizierungen, bevorzugt Alkali-Silanolat-Gruppen und besonders bevorzugt Natrium-Silanolat-Gruppen. Als stabilisierendes Gegenion ist Na⁺ bevorzugt. Die basische Modifizierung wird durch das SiO₂:Na₂O-Gewichtsverhältnis charakterisiert, das je nach Präparat zwischen 15 bis 300:1 liegen kann. Das erfindungsgemäße kolloidale Siliciumdioxid weist ein SiO₂:Na₂O-Gewichtsverhältnis kleiner 250:1, bevorzugt 30 bis 250:1 und besonders bevorzugt 40 bis 70:1 auf. Die basische Modifizierung kann auch als titrierbares Alkali, genauer als Na₂O in Gew.-% angegeben werden. Für das erfindungsgemäße kolloidale Siliciumdioxid beträgt dieser Wert bevorzugt 0,1 bis 0,9 und besonders bevorzugt 0,4 bis 0, 7.

Kolloidales Siliciumdioxid wird für eine große Zahl von Anwendungen verwendet. Die bisher wichtigsten Anwendungen sind im Textilsektor und im Gießerei- und Feuerfestsektor. Einige Anwendungen sind Rutschfestausrüstung von Papiersäcken, Poliermittel für Halbleiterelemente, Verhindern des Klebens von Zellglasfolien, Mattierungs- und Schmutzabweisungseffekte auf Geweben, Festigkeitserhöhung von Wollfäden, Weinschönung zusammen mit Gelantine, Herstellung von Fußbodenwachs und Polituren, schmutzabweisende Shampoos, Erhöhung der Faserreibung bei Geweben und Garnen sowie Erhöhung der Scheuerfestigkeit und des Schichtzusammenhalts von Farben.

Geeignetes kolloidales Siliciumdioxid wird beispielsweise von der Firma Du Pont angeboten. Aus der Reihe der Ludox® -Typen mit monodisperser Partikelgrößenverteilung sind beispielsweise Ludox TM40, Ludox TM50 und insbesondere Ludox SM30 gut geeignet.

Die zur Herstellung der erfindungsgemäßen Klebebänder verwendeten Klebemassen können weitere Komponenten enthalten, wenn diese so gewählt werden, dass die erfindungsgemäßen Eigenschaften hierdurch nicht verschlechtert werden. Beispiele sind Harze, Vernetzer, Weichmacher, Farbstoffe, Entschäumer und Verdickungsmittel sowie weitere Zuschlagstoffe zum Einstellen des gewünschten rheologischen Verhaltens. Modifikationen von Acrylatdispersionen sind bekannt und beispielsweise beschrieben in "Modification of Acrylic Dispersions" , Alexander Zettl in Handbook of Pressure Sensitive Adhesive Technology, Second Edition, edited by Donatas Satas, Van Nostrand Reinhold New York, pp. 457 - 493.

Wässrige Harzdispersionen, d.h. Dispersionen von Harz in Wasser, sind bekannt. Herstellung und Eigenschaften sind beispielsweise beschrieben in "Resin Dispersions", Anne Z. Casey in Handbook of Pressure Sensitive Adhesive Technology, Second Edition, edited by Donatas Satas, Van Nostrand Reinhold New York, pp. 545 - 566.

Harzdispersionen von Kohlenwasserstoffharzen und modifizierten Kohlenwasserstoffharzen sind ebenfalls bekannt und werden beispielsweise von Firma Hercules BV unter dem Handelsnamen Tacolyn angeboten (Beispiel Tacolyn 4177).

Geeignet sind Harzdispersionen auf Basis von Kohlenwasserstoffharzen oder modifizierten Kohlenwasserstoffharzen mit einem Erweichungspunkt zwischen 50 und 100°C. Die Klebemasse kann beispielsweise 5 - 28 Gew.-% der Harzdispersionen enthalten. Der Feststoffgehalt der Harzdispersionen liegt üblicherweise zwischen 40 und 70%.

Der erfindungsgemäßen Klebemasse können gemäß dem Stand der Technik Harzdispersionen auf Basis von Mischungen verschiedener Kohlenwasserstoffharze, sowie von Mischungen von Kohlenwasserstoffharzen mit anderen bekannten Harzen, zugegeben werden, wenn dadurch das charakteristische Eigenschaftsbild der erfindungsgemäßen Klebemasse nicht eigenschaftsschädigend verändert wird. Möglich sind beispielsweise Mischungen von Kohlenwasserstoffharzen mit geringen Mengen von Harzen auf Basis von Kolophonium oder modifiziertem Kolophonium oder Phenolharzen, anderen Naturharzen, Harzestern oder Harzsäuren.

Weiterhin möglich ist die Verwendung von Mischungen verschiedener Harzdispersionen auf Basis von Kohlenwasserstoffharzen sowie von Mischungen von Harzdispersionen auf Basis von Kohlenwasserstoffharzen mit Harzdispersionen auf Basis von anderen bekannten Harzen, wie beispielsweise Harze auf Basis von Kolophonium oder modifiziertem Kolophonium oder Phenolharzen, anderen Naturharzen, Harzestern oder Harzsäuren.

Der erfindungsgemäßem Klebemassen können weiterhin weichmachende Komponenten wie Weichharze, Flüssigharze, Öle oder andere bekannte Komponenten wie beispielsweise alkoxylierte Alkylphenole zugegeben werden. alkoxylierte Alkylphenole sind bekannt und beispielsweise beschrieben in US 4277387 und EP 6571. Die Verwendung von alkoxylierten Alkylphenolen als Weichmacher wurde u.a. vorgeschlagen in "Modification of Acrylic Dispersions" , Alexander Zettl in Handbook of Pressure Sensitive Adhesive Technology, Second Edition, edited by Donatas Satas, Van Nostrand Reinhold New York, p. 471.

Die Eigenschaften der alkoxylierten Alkylphenole werden durch den Alkylrest und überwiegend durch den Aufbau der Polyglykoletherkette bestimmt. Bei der Herstellung kann sowohl Ethylenoxid als auch Propylenoxid verwendet werden. In einer besonderen Ausführung wird propoxyliertes Alkylphenol verwendet. Bevorzugt sind wasserunlösliche alkoxylierte Alkylphenole. Weiterhin bevorzugt sind alkoxylierte Alkylphenole mit einem Siedepunktpunkt größer 100°C, bevorzugt größer 130°C und besonders bevorzugt größer 200°C.

Die erfindungsgemäße Klebemasse kann durch Einsatz von Vernetzern in Richtung auf höhere Scherfestigkeit und verbesserte Feuchtigkeitsbeständigkeit optimiert werden. Auswahl und Anteil der Vernetzer ist dem Fachmann bekannt und kann durch entsprechende Versuche festgelegt werden. Vernetzer für Acrylatdispersionen sind grundsätzlich bekannt und beispielsweise beschrieben in "Acrylic Adhesives" , Donatas Satas in Handbook of Pressure Sensitive Adhesive Technology, Second Edition, edited by Donatas Satas, Van Nostrand Reinhold New York, pp. 411 - 419.

Vernetzer auf Basis von Isocyanat sind grundsätzlich geeignet, aber wegen der begrenzten Topfzeiten und des erhöhten Aufwands bezüglich Arbeitssicherheit nicht bevorzugt. Ein Beispiel für Vernetzer auf Basis von Isocyanat ist Basonat F DS 3425 X (BASF).

Bevorzugt sind isocyanatfreie Vernetzer, beispielsweise Vernetzer auf Basis von Salzen mehrfunktioneller Metalle. Diese sind grundsätzlich bekannt und werden beispielsweise in US Patent 3,740,366 (1973), US Patent 3,900,610 (1975), US Patent 3,770, 780 (1973) und US Patent 3,790,553 (1974) beschrieben. Besonders geeignet sind Vernetzer auf Basis von Zinkkomplexen, die mit Carboxylgruppen kovalente und/oder komplexartige Bindungen ausbilden können.

Die erfindungsgemäßen Klebebänder können weitere Schichten enthalten: Die Verwendung von geeigneten Primern, die zwischen Klebeschicht und Folie angeordnet werden, ist möglich. Hierdurch kann die Verankerung der Klebemasse auf der Folie verbessert werden.

Die erfindungsgemäßen Klebebänder können auch durch Fasern, die überwiegend parallel zur Längsrichtung der Klebebänder ausgerichtet sind, verstärkt werden. Hierzu sind alle Fasern mit ausreichend guten mechanischen Eigenschaften geeignet. Beispiele sind Glasfasern, Fasern aus Polyolefinen, Polyamiden, Polyestern und Kohlefasern. Die Fasern können beispielsweise entweder in einer zusätzlichen Schicht zwischen Folie und Klebeschicht oder innerhalb der Klebeschicht angeordnet werden.

Die Herstellung der Klebebänder kann nach bekannten Verfahren erfolgen. Eine Übersicht über übliche Herstellverfahren findet sich beispielsweise in "Coating Equipment", Donatas Satas in Handbook of Pressure Sensitive Adhesive Technology, Second Edition, edited by Donatas Satas, Van Nostrand Reinhold New York, pp. 767 - 808. Die bekannten Verfahren zum Trocknen und Schneiden der Klebebänder sind ebenfalls im Handbook of Pressure Sensitive Adhesives Technology Seite 809 - 874 zu finden.

Die Beschichtung der Folien mit Dispersionsklebemassen erfolgt bevorzugt mit Drahtrakelsystemen, die so eingestellt werden, dass der gewünschte Masseauftag erzielt wird. Die nachfolgende Trocknung der beschichteten Folie erfolgt insbesondere im Trockenkanal, der mit Heissluft betrieben wird. Grundsätzlich ist auch eine zusätzliche Trocknung mittels Infrarotstrahlern möglich.

Die getrockneten Folien werden auf der Rückseite, die nicht mit Klebemasse beschichtet wurde, einer Oberflächenbehandlung bevorzugt mittels Coronaentladung unterzogen. Die Oberflächenbehandlung muss möglichst gleichmäßig erfolgen. Hierbei wird eine Oberflächenspannung, gemessen mit handelsüblichen Prüftinten, zwischen 30 und 45mN/m, bevorzugt zwischen 35 und 40 mN/m und besonders bevorzugt zwischen 36 und 38 mN/m erzielt.

Die Klebebandrollen sind möglichst mit gleichmäßiger Spannung und gleichmäßigem Andruck aufzuwickeln. Die Optimierung des Wickelns ist abhängig von den verwendeten Geräten und dem Fachmann bekannt. Die Bedingungen beim Wickeln sind so einzustellen, dass ausreichend leises Abrollen der Klebebandrolle erreicht wird.

Die Herstellung der Klebemasse aus den Komponenten b.1., b.2 und ggf. weiteren Komponenten kann in einem getrennten Prozess vor der Beschichtung oder auch mittels automatischer Mischer unmittelbar vor der Beschichtung erfolgen.

Die erfindungsgemäßen Klebebänder weisen gegenüber bekannten Klebebändern mit Polyolefinträger und Klebemasse auf Basis von Acrylatdispersion deutlich verbessertes Abrollverhalten aus. Insbesondere ist die Abrollkraft deutlich reduziert bei gleichzeitig leisem Abrollen auch bei hohen Geschwindigkeiten von beispielsweise 120 m/min. Weiterhin weisen die erfindungsgemäßen Klebebänder gegenüber bekannten Klebebändern mit Polyolefinträger und Klebemasse auf Basis von Acrylatdispersion verbesserte Klebkraft und verbesserte Scherfestigkeit auf.

Durch diese o.g. Verbesserungen können die bekannten Schwächen der bekannten Klebebänder mit Polyolefinträger und Acrylatdispersion überwunden werden. Insbesondere können mit den erfindungsgemäßen Klebebändern deutlich bessere Ergebnisse beim Verschließen von Kartons erzielt werden.

Weiterhin können die erfindungsgemäßen Klebebänder mit handelsüblichen Druckfarben bedruckt werden, wobei gegenüber bekannten Klebebändern mit Polyolefinträger und Klebebmasse auf Basis von Acrylatdispersion der wesentliche Vorteil besteht, dass die erfindungsgemäßen Klebebänder ohne zusätzliche Oberflächenaktivierung beim Bedrucken bedruckt werden können. Hierdurch wird der Druckprozess deutlich vereinfacht.

Bei Verwendung von geeigneten, transparenten Folien und nicht eingefärbten Klebemassen weisen die erfindungsgemäßen Klebebänder sehr gute Transparenz auf, so dass beispielsweise überklebte Strichcodemarkierungen von üblichen Lesegeräten problemlos gelesen werden können.

Die erfindungsgemäßen Klebebänder sind für eine große Zahl von Klebebandanwendungen geeignet. Ein wichtiges Anwendungsfeld sind Verpackungsanwendungen. Die Klebebänder sind geeignet als Kartonverschlussklebebänder, allgemeine Verpackungsklebebänder, Strapping Tapes, Klebebänder zum Verschließen von Kunststoffverpackungen und Kunststoffbeuteln. Die Klebebänder sind zur Palettensicherung geeignet. Weitere Anwendungen sind das Bündeln von losen Güter und Transportgütem, wie beispielsweise Rohren, Holzleisten u.ä.. Die erfindungsgemäßen Klebebänder können zur Transportsicherung von beispielsweise Kühlschränken und anderen elektrischen und elektronischen Geräten verwendet werden. Weitere Anwendungen sind Etikettenschutz, Oberflächenschutz und Aufreissstreifen für Verpackungen. Ebenso sind Anwendungen im Bürobereich möglich.

Im folgenden soll die Erfindung anhand von Beispielen erläutert werden, ohne unnötige Einschränkung.

Die in den Beispielen genannten Parameter wurden mit Hilfe nachstehender Messverfahren bestimmt.

Die Bestimmung des Wassergehalts der Klebemasse erfolgt nach der bekannten Methode von Karl Fischer. Hierbei wird eine bekannte Menge der Klebemasse erwärmt und das hierbei ausgetriebene Wasser unter Verwendung des Karl Fischer Reagenzes mittels Titration bestimmt.

Zur Bestimmung des Masseauftrags wird aus der beschichteten Folie ein kreisrundes Muster mit bekanntem Flächeninhalt ausgeschnitten und gewogen. Danach wird die Klebemasse durch Ablösen mit Aceton entfernt und die nun klebemassefreie Folie erneut gewogen. Aus der Differenz wird der Masseauftrag in g/m² berechnet.

Die Messung der Abrollkraft erfolgt bei konstanter Abrollgeschwindigkeit von 30 m/min durch Messung des Drehmoments und Berechnung der Abrollkraft nach den bekannten Formeln in N/cm.

Die Bestimmung des Abrollgeräuschs erfolgt beim Abrollen des Klebebandes mit einer Abrollgeschwindigkeit von 60, 120 und 180 m/min. Gemessen wird das Abrollgeräusch in dB(A) im Abstand von 10cm vom Zentrum der Klebebandrolle mit einem handelsüblichen Lautstärkemessgerät der Firma Brüel & Kjear (Type 2226). Eine gemessene Lautstärke kleiner als 84 dB(A) wird als "leise" charakterisiert.

Die Messung der Klebkraft auf Stahl erfolgt gemäß DIN EN 1939 und in Anlehnung an AFERA 4001.

### Beispiele

a. Folie
Es wird eine biaxial gereckte, transparente Folie aus Polypropylen Pao Yan BOPP 35µm der Firma PaoYan/Taiwan verwendet:

| | |
|---|---|
| Dicke | 35µm; |
| Flächengewicht | 32 g/m² |
| Reisskraft längs | 140 N/mm² |
| Reisskraft quer | 255 N/mm² |
| Reissdehnung längs | 170 % |
| Reissdehnung quer | 30 % |

Die Oberflächenspannung der Folienoberfläche, die mit der Klebemasse beschichtet wird, beträgt 39 mN/m. Die gegenüberliegende Oberfläche der Folie, die nicht mit der Klebemasse beschichtet wird, wird nach der Beschichtung auch mittels Coronaverfahren behandelt, so dass eine Oberflächenspannung von 36 mN/m gemessen wird.
b. Komponenten der Klebemasse
b.1: Acrylatpolymere aus wässrige Acrylatdispersion der Firma Rohm and Haas mit der Bezeichnung Primal PS83D (Feststoffgehalt 53 Gew.-%; Ammoniakgehalt < 0,2 Gew.-%; pH-Wert 9,1 - 9,8)
b.2: Kolloidales Siliciumdioxid mit ausreichend großer Oberfläche und hydrophiler Modifikation der Oberfläche: Ludox® SM30 der Firma DuPont. Charakterisierung nach Angaben des Herstellers:

| | |
|---|---|
| Partikelgröße | sehr klein ca. 7nm Durchmesser |
| Spezifische Oberfläche | 320 - 400 m²/g SiO₂ |
| Gehalt SiO₂ | 30 Gew.-% |
| pH-Wert bei 25°C | 10,0 |
| Stabilisierendes Gegen-Ion | Natrium |
| Viskosität bei 25°C | 5,5 mPas |
| Dichte bei 25°C | 1,22 |
| Titrierbares Alkali als Na₂O | 0,56 Gew.-% |

c. Herstellung der Klebemasse
Die Herstellung der zu beschichtenden Klebemasse wurde wie folgt durchgeführt:
c.1. In die Acrylatdispersion b.1 wird bei 23°C das kolloidale Siliciumdioxid b.2 unter ständigem Rühren mit einem üblichen mechanischen Rührer zugegeben. Danach wird 30min weiter gut gerührt.
c.2. In einem Zeitraum von 10 min bis 2h erfolgt die Beschichtung.

d. Beschichtung
Die Beschichtung der Folie a. mit der Klebemasse erfolgt durch ein Drahtrakel. Das Drahtrakel und die Beschichtungsgeschwindigkeit werden so eingestellt, dass nach der Trocknung der beschichteten Folie ein Masseauftrag von ca. 24g/m² gemessen wird. Beschichtungsgeschwindigkeit und Trocknerleistung werden so eingestellt, dass nach der Trocknung in der Klebemasse ein Wassergehalt von 0,03 bis 0,13 Gew.-% gemessen wird.
Die Beschichtung erfolgte auf einer Laborbeschichtungsanlage mit einer Arbeitsbreite von 500mm und einer Beschichtungsgeschwindigkeit von 10 m/min. Hinter der Beschichtungsstation mit Drahtrakelauftragswerk befindet sich ein Trockenkanal, der mit heisser Luft (ca. 105°C) betrieben wird. Nach der Beschichtung wurde die beschichtete Folie zu üblichen Klebebandrollen mit 50mm Breite konfektioniert. Hierbei wird die nicht mit Klebemasse beschichtete Oberfläche der Folie mittels Coronaentladung behandelt, so dass danach mit handelsüblichen Prüftinten eine Oberflächenspannung von 36 mN/m gemessen wird. Die Bestimmung der Eigenschaften erfolgte nach dreitägiger Lagerung bei 23°C.
e. Klebemasserezepturen
Folgende Klebemasserezepturen wurden verwendet. Die Angaben in Gew.-% beziehen sich für alle Komponenten auf den Feststoffgehalt.

| | | |
|---|---|---|
| Versuch A | 100 | Gew.-% Acrylatdispersion b.1 |
| Versuch B | 98 | Gew.-% Acrylatdispersion b.1 |
| | 2 | Gew.-% Kolloidales Siliciumdioxid b.2 |

f. Ergebnisse

| Eigenschaft | Versuch A nicht erfindungsgemäß | Versuch B erfindungsgemäß |
|---|---|---|
| Wassergehalt der Klebemasse [g/m²] | 0,05 | 0,08 |
| Klebemasseauftrag [g/m²] | 23,1 | 23,2 |
| Masseverankerung | gut | gut |
| Klebkraft auf Stahl [N/cm[ | 2,4 | 2,8 |
| Abrollkraft bei 30 m/min [N/mm] | 2,8 | 2,0 |
| Abrollgeräusch bei 60 m/min | leise | leise |
| Abrollgeräusch bei 120 m/min | laut | leise |
| Abrollgeräusch bei 180 m/min | laut | leise |

## Patentansprüche

1. Lösungsmittelfreies Klebeband mit
a. einer Folie auf Basis von gereckten Polyolefinen und
b. einer Klebeschicht mit einem Schichtauftrag zwischen 10 und 45 g/m² hergestellt aus einer Mischung enthaltend
| | |
|---|---|
| 95,0 - 99,8 Gew.-% | Acrylatpolymere aus Acrylatdispersion (b.1); |
| 0,2 -5,0 Gew.-% | Kolloidales Siliciumdioxid mit einer spezifischen Oberfläche größer 50 m²/g und hydrophiler Modifikation der Oberfläche (b.2). |

2. Klebeband nach Anspruch 1, **dadurch gekennzeichnet, dass** der Schichtauftrag der Klebeschicht b. 18 bis 35g/m² beträgt.

3. Klebeband nach Anspruch 1, **dadurch gekennzeichnet, dass** die Folie a. aus biaxial gerecktem Polyolefin auf Basis von Polypropylen besteht, insbesondere mit einer Foliendicke zwischen 20 und 100µm.

4. Klebeband nach Anspruch 1, **dadurch gekennzeichnet, dass** die Klebeschicht aus einer Mischung besteht, enthaltend
| | |
|---|---|
| 97,0 - 99,5 Gew.-% | Acrylatpolymere aus Acrylatdispersion (b.1); |
| 0,5 -3,0 Gew.-% | Kolloidales Siliciumdioxid mit ausreichend großer Oberfläche und hydrophiler Modifikation der Oberfläche (b.2). |

5. Klebeband nach Anspruch 1, **dadurch gekennzeichnet, dass** das kolloidale Siliciumdioxid b.2 eine spezifische Oberfläche von 100 bis 500 m²/g aufweist.

6. Klebeband nach Anspruch 1, **dadurch gekennzeichnet, dass** das kolloidale Siliciumdioxid b.2 einer spezifische Oberfläche von 200 bis 450 m²/g aufweist.

7. Klebeband nach Anspruch 1, **dadurch gekennzeichnet, dass** das kolloidale Siliciumdioxid eine hydrophile Modifikation der Oberfläche durch Hydroxylgruppen und damit Silanolgruppen enthält.

8. Klebeband nach Anspruch 1, **dadurch gekennzeichnet, dass** das kolloidale Siliciumdioxid eine basische Modifikation der Oberfläche aufweist, so dass neben den Silanolgruppen auch Alkalisilanolatgruppen, insbesondere Natriumsilanolatgruppen vorliegen.

9. Klebeband nach Anspruch 8, **dadurch gekennzeichnet, dass** die basische Modifizierung der Oberfläche des Siliciumdioxids zu Natriumsilanolatgruppen derart ist, dass 0,1 bis 0,9 Gew.-% titrierbares Alkali, gemessen als Na₂O, vorliegen.

10. Klebeband nach Anspruch 1, **dadurch gekennzeichnet, dass** zur Herstellung der Mischung für die Klebeschicht kolloidales Siliciumdioxid in wässriger Lösung mit SiO₂ -Anteil von 10 bis 55 Gew.-%, insbesondere 20 bis 40 Gew.-% verwendet wird.

11. Klebeband nach Anspruch 1, **dadurch gekennzeichnet, dass** zwischen der Folie a. und der Klebeschicht b. eine Schicht aus einem geeignetem Primer aufgebracht ist.

12. Verwendung des Klebebandes nach einem der Ansprüche 1 bis 11 als Verpackungsklebeband, mit leisem Abrollen auch bei hohen Abrollgeschwindigkeiten, gutem Anfassvermögen zu Papier, insbesondere recycliertem Papier, ausreichender Kohäsion und guter Verpackungssicherheit.

13. Verwendung des Klebebandes nach einem der Ansprüche 1 bis 11 zur Herstellung eines bedruckten Klebebandes mittels einfacher Bedruckung ohne zusätzliche Oberflächenaktivierung bei der Bedruckung mittels Coronaentladung.

## Claims

1. Solvent-free adhesive tape having
a. a film based on oriented polyolefins and
b. an adhesive layer applied at between 10 and 45 g/m² and prepared from a mixture comprising
| | |
|---|---|
| 95.0 - 99.8% by weight of | acrylate polymers from acrylic dispersion (b.1); |
| 0.2 - 5.0% by weight of | colloidal silica having a specific surface area of more than 50 m²/g and hydrophilic modification of the surface (b.2). |

2. Tape according to Claim 1, **characterized in that** the application rate of the adhesive layer b is from 18 to 35 g/m².

3. Adhesive tape according to Claim 1, **characterized in that** the film a. is composed of biaxially oriented polyolefin based on polypropylene, in particular having a film thickness of between 20 and 100 µm.

4. Adhesive tape according to Claim 1, **characterized in that** the adhesive layer is composed of a mixture comprising
| | |
|---|---|
| 97.0 - 99.5% by weight | of acrylate polymers from acrylic dispersion (b.1); |
| 0.5 - 3.0% by weight | of colloidal silica having a sufficiently large surface area and hydrophilic modification of the surface (b.2). |

5. Adhesive tape according to Claim 1, **characterized in that** the colloidal silica b.2 has a specific surface area of from 100 to 500 m²/g.

6. Adhesive tape according to Claim 1, **characterized in that** the colloidal silica b.2 has a specific surface area of from 200 to 450 m²/g.

7. Adhesive tape according to Claim 1, **characterized in that** the colloidal silica includes a hydrophilic modification of the surface by hydroxyl groups and hence silanol groups.

8. Adhesive tape according to Claim 1, **characterized in that** the colloidal silica has a basic modification of the surface, so that in addition to the silanol groups there are also alkali metal silanolate groups, especially sodium silanolate groups.

9. Adhesive tape according to Claim 8, **characterized in that** the basic modification of the surface of the silica to give sodium silanolate groups is such that there is from 0.1 to 0.9% by weight of titratable alkali, measured as Na₂O.

10. Adhesive tape according to Claim 1, **characterized in that** the mixture for the adhesive layer is prepared using colloidal silica in aqueous solution with an SiO₂ content of from 10 to 55% by weight, in particular from 20 to 40% by weight.

11. Adhesive tape according to Claim 1, **characterized in that** a layer of a suitable primer is applied between the film a. and the adhesive layer b.

12. Use of the adhesive tape according to one of Claims 1 to 11 as adhesive packaging tape, with quiet unwind even at high unwind speeds, good tack toward paper, especially recycled paper, and a good cohesion and good packaging security.

13. Use of the adhesive tape according to one of Claims 1 to 11 for producing a printed adhesive tape by means of simple printing without additional surface activation in the case of printing by means of corona discharge.

## Revendications

1. Bande adhésive sans solvant, comportant
a. une feuille à base de polyoléfines étirées et
b. une couche adhésive appliquée à raison de 10 à 45 g/m² préparée à partir d'un mélange contenant
de 95,0 à 99,8% en poids de polymères acryliques d'une dispersion acrylique (b.1)
de 0,2 à 5,0% en poids de dioxyde de silicium colloïdal d'une surface spécifique de plus de 50 m²/g avec modification hydrophile de cette surface (b.2).

2. Bande adhésive selon la revendication 1, **caractérisée en ce que** la densité d'application massique de la couche adhésive b. est de 18 à 35 g/m²;

3. Bande adhésive selon la revendication 1, **caractérisée en ce que** la feuille a. est constituée de polyoléfine étirée biaxialement, à base de polypropylène, en particulier d'une épaisseur de feuille entre 20 et 100 µm.

4. Bande adhésive selon la revendication 1, **caractérisée en ce que** la couche adhésive est constituée d'un mélange contenant
de 97,0 à 99,5% en poids de polymères acryliques d'une dispersion acrylique (b.1)
de 0,5 à 3,0% en poids de dioxyde de silicium colloïdal d'une surface spécifique suffisante et avec modification hydrophile de cette surface (b.2).

5. Bande adhésive selon la revendication 1, **caractérisée en ce que** le dioxyde de silicium colloïdal b.2 présente une surface spécifique de 100 à 500 m²/g.

6. Bande adhésive selon la revendication 1, **caractérisée en ce que** le dioxyde de silicium colloïdal B.2 présente une surface spécifique de 200 à 450 m²/g.

7. Bande adhésive selon la revendication 1, **caractérisée en ce que** le dioxyde de silicium colloïdal contient une modification hydrophile de surface par des groupes hydroxyle et dès lors des groupes silanol.

8. Bande adhésive selon la revendication 1, **caractérisée en ce que** le dioxyde de silicium colloïdal présente une modification basique de surface, de sorte qu'outre les groupes silanol, des groupes de silanolate de métal alcalin, en particulier des groupes de silanolate de sodium, sont présents.

9. Bande adhésive selon la revendication 8, **caractérisée en ce que** la modification basique de la surface du dioxyde de silicium en groupes de silanolate de sodium est telle qu'il se trouve de 0,1 à 0,9% en poids d'alcali titrable, mesuré en Na₂O.

10. Bande adhésive selon la revendication 1, **caractérisée en ce que**, pour la préparation du mélange destiné à la couche adhésive, on utilise du dioxyde de silicium colloïdal en solution aqueuse ayant une fraction de SiO₂ de 10 à 55% en poids, en particulier de 20 à 40% en poids.

11. Bande adhésive selon la revendication 1, **caractérisée en ce que**, entre la feuille a. et la couche adhésive b., est appliquée une couche d'un apprêt approprié.

12. Utilisation de la bande adhésive selon l'une quelconque des revendications 1 à 11 comme bande adhésive d'emballage, présentant un déroulement silencieux même à de grandes vitesses de déroulement, une bonne adhérence de contact sur le papier, en particulier le papier recyclé, une cohésion suffisante et une bonne sécurité d'emballage.

13. Utilisation de la bande adhésive selon l'une quelconque des revendications 1 à 11 pour la préparation d'une bande adhésive imprimée par simple impression et sans activation de surface additionnelle lors de l'impression au moyen d'une décharge corona.
